Europäisches Patentamt

(19) European Patent Office

Office européen des brevets

(11) Publication number: **0 153 147**
A2

(12) **EUROPEAN PATENT APPLICATION**

(21) Application number: 85300965.2

(22) Date of filing: 14.02.85

(51) Int. Cl.⁴: **G 02 F 1/13**, G 02 B 27/46, G 03 H 1/22 // G06K9/76

(30) Priority: 16.02.84 GB 8404082

(43) Date of publication of application: 28.08.85 Bulletin 85/35

(84) Designated Contracting States: **AT BE CH DE FR IT LI LU NL SE**

(71) Applicant: **International Standard Electric Corporation, 320 Park Avenue, New York New York 10022 (US)**

(72) Inventor: **Crossland, William Alden, 15 School Lane, Harlow Essex (GB)**
Inventor: **Scarr, Robert Walter Alister, 63 Lower Street, Stansted Essex CM24 8LR (GB)**

(74) Representative: **Vaufrouard, John Charles, ITT Patent Department UK Maidstone Road Foots Cray, Sidcup KentDA14 5HT (GB)**

(54) Coherent light optical processor.

(57) A coherent light optical processor employs a matrix addressed smectic liquid crystal display device (14) as a matched filter in the spatial frequency or Fourier transform plane of the correlator.

## COHERENT LIGHT OPTICAL PROCESSOR

A use of liquid crystal display technology in optical processing using coherent light is described in Patent Specification No. 2118347A where a liquid crystal display cell is used in association with a laser to generate a coherent light image. This image is then optically processed with the aid of a matched filter hologram formed conventionally in photographic emulsion.

The present invention is concerned with using liquid crystal technology in the optical processing of a coherent light image which may or may not itself have been created using liquid crystal technology.

According to the present invention there is provided a coherent light optical processor including a coherent light image generator with an optical imaging system that incorporates in a Fourier transform plane of that system a transmission type smectic liquid crystal display device exhibiting storage.

Preferred embodiments of the invention will now be described with reference to the accompanying drawings in which:

Figure 1 depicts schematically one format of optical processor, and

Figure 2 depicts an alternative format.

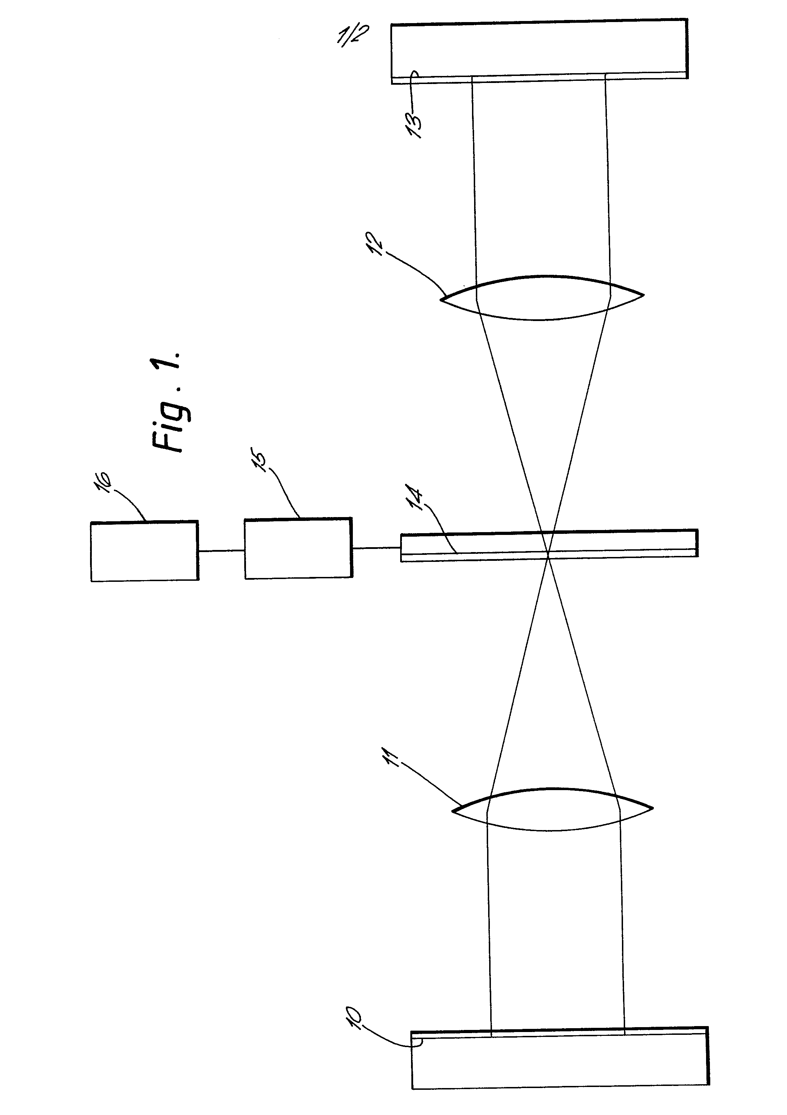

The essential constituents of the optical processor of Figure 1 are a coherent light image forming device 10 forming a coherent light image at the input plane of a lens system comprising lenses 11 and 12 which form an image of the input plane on an image utilisation device 13 at the output plane. The form of appropriate device will depend upon the use to which the processor is being put. Typically, it may be a photosensitive matrix array or a television camera, though in some circumstances a single large area detector may suffice.

The two lenses 11 and 12 are arranged so as to have a common focal plane, thus forming a Fourier transform plane (also known as a spatial frequency plane) at which a hologram 14 is located. As described thus far, the system is one of the conventional system formats for optical holography. The input plane may contain the image of a pattern to be recognised or processed, while the hologram in the Fourier transform plane may contain information concerning a pattern to be recognised or a pattern with which the input image is to be correlated. Conventionally but not essentially the hologram has been an optical contrast (density) pattern developed in photographic emulsion, providing an absorption (optical density) hologram rather than a phase hologram, and is used according to a method originally described by Vander Lugt. In view of this, the resulting arrangement is also sometimes known as a 'Vander Lugt filter'. With the hologram in position the output plane contains a spatial representation of the matched filtering or correlation operation performed on the input by the hologram. In this particular instance however, the hologram 14 is not formed by a photographic emulsion, but is formed by a matrix addressed transmission type smectic liquid crystal display

0153147

- 3 -

device, and hence is programmable by means of a controller 15 deriving data from a hologram store 16.

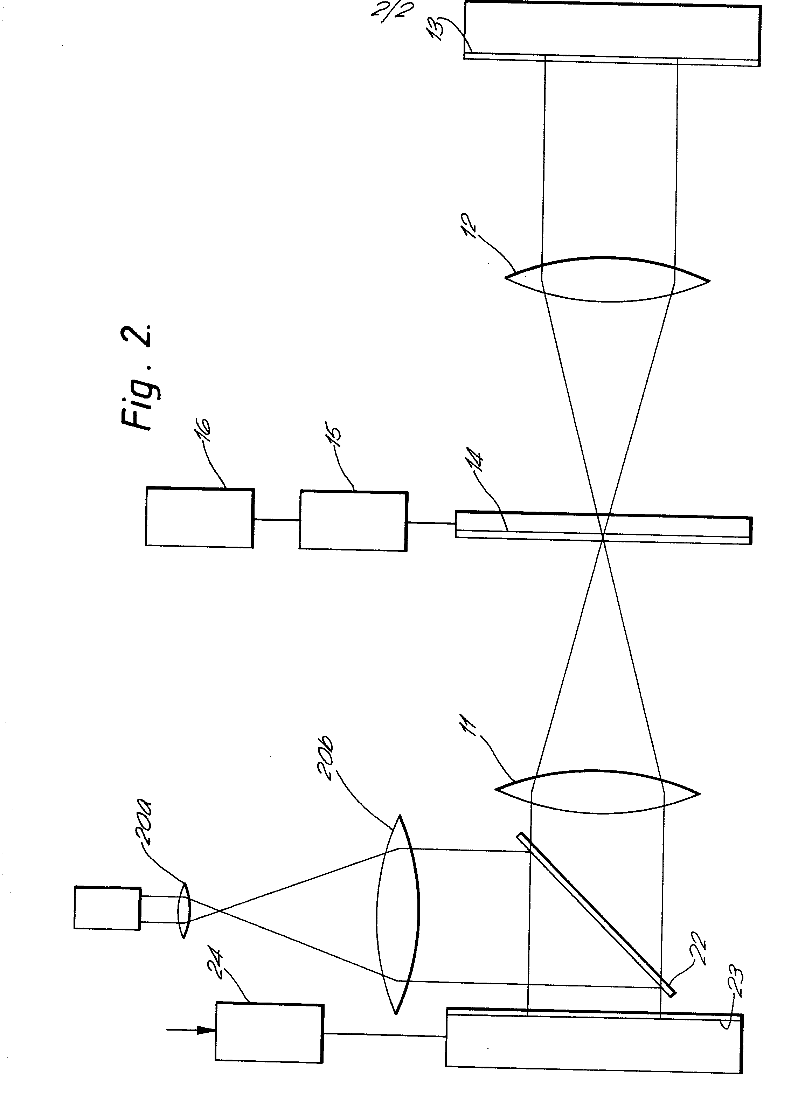

The arrangement of Figure 1 employs a transmissive type of image medium for the input plane, whereas the arrangement of Figure 2 is suited to the use of reflexive type image media for the input plane, and thus may employ a coherent light imaging display of the type described in Patent Specification No. 2118347A to which previous reference has already been made.

Parts which are common to the two systems have been ascribed the same index numerals. A lens system 20a, 20b directs a broad collimated beam of light from a laser 21 on to a beam splitter 22 angled to direct the beam normally upon a reflex type coherernt image generator 23 situated at the input plane. This image generator may be provided by a liquid crystal display device of the type described in Patent Specification No. 2118347A, and is represented as being driven by a display controller 24 receiving input data. Part of the light reflected by the image generator 23 is then transmitted through the beam splitter 22 to enter the first of the two lenses 11 and 12. This light then passes through the liquid crystal display device hologram 14 in the Fourier transform plane before passing through the second lens of the system to reach the image utilisation device 13.

When the processor is being used as a matched filter image correlator/convolver, the image of the pattern to be recognised or processed is created at the image forming device 10, while the smectic liquid crystal cell 14 is arranged to display a hologram in optical contrast form of a representation of the pattern to be recognised or the pattern with which the input pattern at 10 is to be correlated. The output plane 13 then contains a spatial representation of the matched filtering or correlation operation performed on the input by the hologram.

One feature of the use of a smectic display cell for displaying the hologram is that this type of cell can be operated as a storage type device that does not require continuous refreshing. On the other hand it is electronically addressable, and hence one hologram can be substituted for another without encountering the mechanical tolerancing problems that are manifest when attempting to physically replace one hologram carrying medium with another. If the application requires the hologram to be changed very rapidly it may be necessary to use a smectic C device rather than the slower smectic A.

Because the smectic display device 14 is organised on a matrix basis, the images for the transform plane holograms are readily stored in digital form. A binary digit per pixel is sufficient for a black and white representation, but for a display capable of multi-level (grey scale) working a "word" of several bits is needed.

The arrangements shown in Figures 1 and 2 represent the simplest form of optical geometry, but other arrangements are possible and can be more convenient from the point of view of producing the reference holograms. Thus the reference light source used in the production of the reference hologram, instead of being located in the input plane and offset from the optical axis, may be applied separately, being arranged to be incident at the spatial frequency or Fourier transform plane at an angle, theta, to the optical axis. The output plane for correlation is then offset by the same angle, theta, to the optical axis.

One of the applications for the processor is in the field of surveillance involing the detection of a change in a scene or the presence of a particular object in a scene. This may be for instance for an intruder alarm or for processing aerial photographs. In these cases the reference pattern is a past representation of the scene transformed into a hologram and displayed on the spatial frequency or Fourier transform plane. The new or current version of the scene is displayed on the input plane. Perfect autocorrelation will occur until something is added to or subtracted from the input scene, whereupon there will be a change in the previously near uniform light field in the output plane. A threshold device provides an indication when a significant change in output level occurs. (Thus for this application a single broad area detector may suffice at the output plane instead of an array.) If it is required to ignore very slow changes in the input schene, the system can be designed to update the holographic representation of the input scene by making fresh holograms periodically and replacing the representation in the correlation filter by a later one.

Another of the applications for the processor is in the field of pattern recognition. It may be required for instance to detect the presence or absence of a particular object in a scene. For this purpose a hologram of that object in its various aspects is made against a neutral background and placed in the spatial frequency or Fourier transform plane. When the same object enters the scene it will autocorrelate with one of the holographic representation providing a peak output in the output plane.

A special class of pattern recognition is character recognition. This is conveniently accomplished in the following way. Holograms are intially produced and stored digitally representing individual characters in the character set. Thus if there are 100 characters in the set there will be 100 holograms. A page of unknown input material is positioned in the input plane. This page of material is presumed to contain only known characters from the specified character set. The holograms representing each character are displayed in turn on the smectic display in the spatial frequency of Fourier transform plane. Suppose that one character so represented is the letter "e". All the letters "e" in the input material will correlate producing peaks of output in output plane at positions corresponding to their positions in the input material. Thus, by cycling through the character repertoire, all the characters on the input page can be identified in their correct relative positions. Speed of processing is largely determined by the read write time of the smectic display in the spatial frequency of Fourier transform plane.

A threshold must be established in order to recognise a character in a specific position and an output above that threshold signifies the presence of a character there. However, it is possible that rather similar characters (e.g. 0 and Q) could become confused by the recognition system and lead to an ambiguous or false result if one particular character in the input plane is recognised more than once when tested against the whole character set. This problem can be resolved by comparing the absolute values of the outputs in order to establish the most probable character. The necessary back-tracking can be achieved optically by reprocessing the disputed characters or electronically by storing the peak values on the first pass.

A further application lies in the field of of radar signal processing.

CLAIMS:

1. A coherent light optical processor including a coherent light image generator (10) with an optical imaging system (11, 12) that incorporates in a Fourier transform plane (14) of that system a transmission type smectic liquid crystal display device exhibiting storage.

2. A coherent light optical processor as claimed in claim 1, wherein the smectic display device is matrix addressed.

3. A surveillance system incorporating a coherent light optical processor as claimed in claim 1 or 2.

4. A character recognition system incorporating a coherent light optical processor as claimed in claim 1 or 2.

0153147

Fig. 1.

*Fig . 2.*

2/2

0153147